# EUROPEAN PATENT APPLICATION

(11) **EP 4 501 627 A1**
(43) Date of publication of application: **05.02.2025**
(21) Application number: 23775086.4
(22) Date of filing: 24.03.2023
(51) Int. Cl.: B32B 27/00, B32B 27/18, H05B 33/04

(54) **RESIN SHEET AND PRODUCTION METHOD THEREFOR**

(30) Priority: 25.03.2022 JP 2022050185
(71) Applicant: AJINOMOTO CO., INC., Chuo-ku Tokyo 104-8315 (JP)
(72) Inventor: OHASHI, Satoru, Kawasaki-shi, Kanagawa 210-0801 (JP); BABA, Eiji, Kawasaki-shi, Kanagawa 210-0801 (JP); OKUNO, Manami, Kawasaki-shi, Kanagawa 210-0801 (JP)
(74) Representative: Mewburn Ellis LLP
(86) International application number: PCT/JP2023/011803
(87) International publication number: WO 2023/182493

(57) **Abstract**

A resin sheet that can suppress water absorption in a resin composition layer of a resin sheet (particularly water absorption in a resin composition layer containing half-calcined hydrotalcite or calcium oxide) during storage, permit foreign matter inspection of the resin composition layer of a resin sheet with high accuracy using an optical automatic appearance inspection device (AOI), and can suppress warping during formation of the resin composition layer is provided. A resin sheet having a first film, a resin composition layer, and a second film or a glass plate, wherein the resin composition layer is present between the first film and the second film or between the first film and the glass plate, the first film has a single-layer plastic film as a substrate, a barrier layer formed on the plastic film surface, and a release layer formed on the barrier layer surface not in contact with the plastic film or on the plastic film surface not having a barrier layer, the first film is a transparent film, the water vapor transmission rate of the first film is 0.01 (g/m²/24hr) or more and 1 (g/m²/24hr) or less, the release layer of the first film is in contact with the resin composition layer, the second film does not have a release layer, the water vapor transmission rate of the second film is less than 0.01 (g/m²/24hr), and the glass plate does not have a release layer.

## Description

### [Technical Field]

The present invention relates to a resin sheet suitable for sealing electronic devices such as organic EL element, solar cell, and touch panel having a conductive substrate, and a method for producing the same.

### [Background Art]

In order to protect electronic devices such as organic electroluminescence (EL) element, solar cell, and touch panel having a conductive substrate from moisture, the electronic devices are encapsulated using a resin sheet having a resin composition layer.

The resin sheet is generally composed of a support, a resin composition layer, and a cover film for protecting the aforementioned resin composition layer (e.g., Patent Literature 1).

In addition, as a method for improving the moisture blocking property of a resin sheet, it is known to blend half-calcined hydrotalcite into the resin composition layer of the resin sheet (e.g., Patent Literature 2).

Paragraphs [0015] and [0016] of Patent Literature 1 state that a plastic film such as polyethylene terephthalate or a plastic film having a barrier layer can be used as a support. However, paragraph [0018] of thereof only states, "Examples of the cover film for the resin sheet include plastic films similar to the support", and does not state that a plastic film having a barrier layer can be used as a cover film.

When a plastic film with high moisture permeability that does not have a barrier layer is used as a cover film for a resin sheet, moisture may permeate through the cover film during storage of the resin sheet and be mixed into the resin composition layer. As a result, the performance of the resin sheet to protect an electronic device from moisture may be reduced, and when such a resin sheet is used to seal an electronic device, the life of the electronic device may be shortened.

In addition, a resin sheet having a resin composition layer containing half-calcined hydrotalcite can achieve high moisture blocking properties due to the half-calcined hydrotalcite, but the half-calcined hydrotalcite has the property of reversibly absorbing and releasing moisture. Therefore, in a resin sheet having a resin composition layer containing half-calcined hydrotalcite, for example, the half-calcined hydrotalcite absorbs moisture during storage of the resin sheet, and then releases the absorbed moisture into the resin composition layer. If an electronic device is sealed with a resin composition layer containing the moisture thus released, the life of the electronic device may be shortened. In addition, a resin sheet having a resin composition layer containing calcium oxide can also achieve high moisture blocking properties, but since calcium oxide absorbs moisture irreversibly, calcium oxide absorbs moisture during storage of the resin sheet, and the moisture blocking properties are lost. If an electronic device is sealed with such a resin composition layer, the life of the device may be shortened.

In view of the above, for example, Patent Literature 3 discloses a resin sheet in which a plastic film having a barrier layer is used as a support, and a moisture-proof film is also used as a cover film, thereby suppressing water absorption by the resin composition layer.

### [Citation List]

### [Patent Literature]

[Patent Literature 1]
   JP-A-2016-186843
[Patent Literature 2]
   WO 2017/135112
[Patent Literature 3]
   WO 2018/181426

### [Summary of Invention]

### [Technical Problem]

However, a barrier film with high moisture permeability resistance generally has a multi-layer structure in which a plurality of thin inorganic films are laminated on a plastic film by deposition or the like, a metal foil is bonded thereto, or an inorganic thin film and a plastic film are laminated alternately. When used as a support for varnish coating, it tends to warp when heated. In addition, a barrier film having a metal foil or a barrier film with a multi-layer structure often has air bubbles between layers. When foreign matter inspection of the resin composition layer of a resin sheet is performed using an automatic optical inspection device (AOI), the air bubbles are detected as defects, making accurate inspection difficult and reducing suitability for AOI evaluation. In addition, a film made of aluminum foil and a plastic film also has high moisture permeability resistance, but also tends to warp and has no light transmittance, and therefore, foreign matter inspection cannot be performed using AOI.

The present invention has been made in consideration of the above-mentioned circumstances, and an object of the present invention is to provide a resin sheet that can suppress warping when forming a resin composition layer and enables foreign matter inspection of the resin composition layer with high accuracy using an optical automatic appearance inspection device (AOI).

### [Solution to Problem]

The present inventors have conducted intensive studies in an attempt to solve the above-mentioned problems, and found that by using a transparent film having a single-layer plastic film as a substrate, a barrier layer formed on the plastic film surface, and a release layer formed on the barrier layer surface not in contact with the plastic film or on the plastic film surface not having a barrier layer, as a film used as a support when a resin composition layer is formed and which is peeled off when an electronic device is sealed, and by using a film or glass plate having no release layer and having high moisture permeability resistance, as a layer to be incorporated in an electronic device, it is possible to suppress water absorption in the resin composition layer (particularly water absorption in a resin composition layer containing half-calcined hydrotalcite or calcium oxide), enable foreign matter inspection of the resin composition layer of a resin sheet with high accuracy using an optical automatic appearance inspection device (AOI), and suppress warping during formation of the resin composition layer, which resulted in the completion of the present invention.

That is, the present invention has the following features.
[1] A resin sheet having a first film, a resin composition layer, and a second film or a glass plate, wherein the resin composition layer is present between the first film and the second film or between the first film and the glass plate,
   the first film has a single-layer plastic film as a substrate, a barrier layer formed on the plastic film surface, and a release layer formed on the barrier layer surface not in contact with the plastic film or on the plastic film surface not having a barrier layer,
   the first film is a transparent film,
   the water vapor transmission rate (hereinafter sometimes abbreviated as "WVTR") of the first film is 0.01 (g/m²/24hr) or more and 1 (g/m²/24hr) or less,
   the release layer of the first film is in contact with the resin composition layer,
   the second film does not have a release layer,
   the water vapor transmission rate of the second film is less than 0.01 (g/m²/24hr),
   and the glass plate does not have a release layer.
[2] The resin sheet according to [1], having a first film, a resin composition layer, and a second film,
   wherein the resin composition layer is present between the first film and the second film,
   the first film has a single-layer plastic film as a substrate, a barrier layer formed on the plastic film surface, and a release layer formed on the barrier layer surface not in contact with the plastic film or on the plastic film surface not having a barrier layer,
   the first film is a transparent film,
   the water vapor transmission rate of the first film is 0.01 (g/m²/24hr) or more and 1 (g/m²/24hr) or less,
   the release layer of the first film is in contact with the resin composition layer,
   the second film does not have a release layer, and the water vapor transmission rate of the second film is less than 0.01 (g/m²/24hr).
[3] The resin sheet according to [1] or [2], wherein a thickness of the first film is 20 um to 100 µm.
[4] The resin sheet according to any one of [1] to [3], wherein the first film has a total light transmittance of 80% or more.
[5] The resin sheet according to any one of [1] to [4], wherein the first film is a support for forming a resin composition layer.
[6] The resin sheet according to any one of [1] to [5], wherein the resin composition layer comprises a hygroscopic filler.
[7] The resin sheet according to [6], wherein the hygroscopic filler is half-calcined hydrotalcite or calcium oxide.
[8] The resin sheet according to any one of [1] to [7], wherein the resin composition layer comprises a polyolefin-based resin and/or an epoxy resin.
[9] The resin sheet according to [8], wherein the resin composition layer comprises a polyolefin-based resin.
[10] A method for producing the resin sheet according to any one of [1] to [9], comprising a step of forming a resin composition layer on the release layer of the first film and a step of laminating a second film or a glass plate to the resin composition layer.
[11] A method for producing an electronic device, comprising a step of peeling off a first film of the resin sheet according to any one of [1] to [9], laminating a second film or a glass plate and a resin composition layer to the electronic device with the resin composition layer facing the electronic device, and sealing the electronic device with the second film or the glass plate and the resin composition layer.
[12] A resin sheet precursor having a first film, a resin composition layer, and a third film,
   wherein the resin composition layer is present between the first film and the third film,
   the first film has a single-layer plastic film as a substrate, a barrier layer formed on the plastic film surface, and a release layer formed on the barrier layer surface or the plastic film surface,
   the first film is a transparent film,
   the water vapor transmission rate of the first film is 0.01 (g/m²/24hr) or more and 1 (g/m²/24hr) or less,
   the third film has a release layer,
   the water vapor transmission rate of the third film is 0.01 (g/m²/24hr) or more and 1 (g/m²/24hr) or less, and the release layer of the first film and the release layer of the third film are in contact with the resin composition layer.
[13] The resin sheet precursor according to [12], wherein the resin composition layer comprises half-calcined hydrotalcite or calcium oxide as a hygroscopic filler.
[14] A method for producing the resin sheet precursor according to [12] or [13], comprising a step of forming a resin composition layer on the release layer of the first film and a step of laminating a third film to the resin composition layer.
[15] A method for producing an electronic device, comprising a step of peeling off the third film of the resin sheet precursor according to [12] or [13], laminating a second film having no release layer and having a water vapor transmission rate of less than 0.01 (g/m²/24hr) or a glass plate having no release layer to the resin composition layer to obtain a resin sheet having the first film, the resin composition layer, and the second film or the glass plate, and then peeling off the first film of the resin sheet, and laminating the second film or the glass plate and the resin composition layer to the electronic device with the resin composition layer facing the electronic device, and sealing the electronic device with the second film or the glass plate and the resin composition layer.

### [Advantageous Effects of Invention]

According to the present invention, water absorption in a resin composition layer of a resin sheet (particularly water absorption in a resin composition layer containing half-calcined hydrotalcite or calcium oxide) can be suppressed, foreign matter inspection of the resin composition layer of a resin sheet can be performed with high accuracy using an optical automatic appearance inspection device (AOI), and warping during formation of the resin composition layer can be suppressed.

### [Description of Embodiments]

The present invention is described below with reference to preferred embodiments.

### [Resin sheet]

The resin sheet of the present invention has a first film, a resin composition layer, and a second film or a glass plate, wherein the resin composition layer is present between the first film and the second film or between the first film and the glass plate, the first film has a single-layer plastic film as a substrate, a barrier layer formed on the plastic film surface (preferably one surface of plastic film), and a release layer formed on the barrier layer surface not in contact with the plastic film or on the plastic film surface not having a barrier layer (preferably a plastic film surface not having a barrier layer), the first film is a transparent film, the water vapor transmission rate of the first film is 0.01 (g/m²/24hr) or more and 1 (g/m²/24hr) or less, the release layer of the first film is in contact with the resin composition layer, the second film does not have a release layer, the water vapor transmission rate of the second film is less than 0.01 (g/m²/24hr), and the glass plate does not have a release layer. In the JIS and others, those with a thickness of less than 0.25 mm are classified as films, and those with a thickness of more than 0.25 mm are classified as sheets, but the present invention is not limited to such classifications.

In the resin sheet of the present invention, the resin composition layer is present between the first film and the second film or between the first film and the glass plate. The first film is used as a support for forming the resin composition layer. The first film is also peeled off to expose the resin composition layer before laminating the resin sheet on an electronic device such as organic EL element, and also functions as a cover film. The first film has a release layer on the surface that contacts the resin composition layer to facilitate peeling. The second film does not have a release layer because it is incorporated into the electronic device as a barrier film when sealing the electronic device and is not peeled off.

In a preferred embodiment of the present invention, the resin sheet has a first film, a resin composition layer, and a second film, and the resin composition layer is present between the first film and the second film.

### <First film>

In the resin sheet of the present invention, the first film has a single-layer plastic film as a substrate, a barrier layer formed on a plastic film surface (preferably one surface of the plastic film), and a release layer formed on the barrier layer surface not in contact with the plastic film or on the plastic film surface not having the barrier layer (preferably the plastic film surface not having the barrier layer), the first film is a transparent film, the water vapor transmission rate of the first film is 0.01 (g/m²/24hr) or more and 1 (g/m²/24hr) or less, and the release layer of the first film is in contact with the resin composition layer.

Examples of the plastic film include single-layer plastic films of polyolefins such as polyethylene and polypropylene (PP), polyesters such as polyethylene terephthalate (PET) and polyethylene naphthalate (PEN), polycarbonate (PC), polyimide (PI), cycloolefin polymer (COP), and polyvinyl chloride. The plastic film is preferably a polyethylene terephthalate film, a cycloolefin polymer film, a polyethylene naphthalate film, or a polycarbonate film, more preferably a polyethylene terephthalate film or a cycloolefin polymer film. The thickness of the substrate (single-layer plastic film) is preferably 10 to 100 µm, more preferably 15 to 90 µm, further preferably 20 to 80 µm.

By making the substrate a single-layer plastic film having transparency (preferably having a total light transmittance described below), foreign matter inspection (defect detection) of the resin composition layer can be performed using an optical automatic appearance inspection device (AOI). When the substrate is a plastic film having two or more layers, an adhesive layer is required between each layer, and many defects and bubbles are generated in the substrate itself, making it impossible to perform AOI detection of the resin composition layer with high accuracy. In addition, when the substrate is a plastic film having two or more layers, the linear thermal expansion coefficients of each layer are different, and therefore, warping due to the substrate is likely to occur when heated. By making the substrate a single-layer plastic film, warping can be suppressed and stable mass production can be achieved.

Examples of the barrier layer in the first film include inorganic films such as silica-deposited film, silicon nitride film, and silicon oxide film, organic-inorganic mixed films containing inorganic substances such as metal oxides and organic substances such as organic resins, and the like. The barrier layer may have a multilayer structure in which a plurality of inorganic films are laminated, or may be composed of organic substances and inorganic substances, as long as the barrier layer has transparency as the first film and has a water vapor transmission rate of 0.01 (g/m²/24hr) or more and 1 (g/m²/24hr) or less. The total thickness of the barrier layers in the first film is not particularly limited, as long as the barrier layer has transparency as the first film and has a water vapor transmission rate of 0.01 (g/m²/24hr) or more and 1 (g/m²/24hr) or less, but is preferably 0.01 or more and less than 1 µm, more preferably 0.05 or more and 0.9 um or less, and further preferably 0.1 or more and 0.8 um or less.

The barrier layer in the first film can be produced by laminating an inorganic film such as silicon oxide (silica), aluminum oxide, magnesium oxide, silicon nitride, silicon nitride oxide, SiCN, or amorphous silicon on the surface of a substrate (single-layer plastic film) by a chemical vapor deposition method (e.g., chemical vapor deposition method using heat, plasma, ultraviolet light, vacuum heat, vacuum plasma, or vacuum ultraviolet light) or a physical vapor deposition method (e.g., vacuum deposition method, sputtering method, ion plating method, laser deposition method, molecular beam epitaxy method), etc. (see, for example, JP-A-2013-108103, etc.). Alternatively, it can be formed by applying a coating liquid consisting of an inorganic substance such as a metal oxide and an organic resin to the surface of a substrate (single-layer plastic film), drying same, and forming an organic-inorganic mixed film (see, for example, JP-A-4028353, etc.).

The release layer can be formed, for example, by applying a release agent to a substrate (a single-layer plastic film) and drying the applied release agent at a drying temperature of, for example, 100 to 150°C for a drying time of, for example, 5 to 120 minutes.

Examples of the release agent include silicone-based release agents, alkyd-based release agents, fluorine-based release agents, and olefin-based release agents. The release layer is preferably formed from a silicone-based release agent or an alkyd-based release agent. The thickness of the release layer is preferably 0.05 to 1 µm, more preferably 0.05 to 0.5 um, further preferably 0.05 to 0.1 µm.

The thickness of the first film is preferably 20 to 100 µm, more preferably 20 to 90 µm, further preferably 20 to 80 um, from the viewpoints of suppressing the occurrence of warping and winding the resin sheet into a roll.

The total light transmittance of the first film is preferably 80% or more, more preferably 82% or more, further preferably 85% or more, so as to enable foreign matter inspection (defect detection) of the resin composition layer with an optical automatic appearance inspection device (AOI). The total light transmittance can be measured, for example, in accordance with JIS K7361-1 "Test method for total light transmittance of plastic transparent materials, Part 1: Single beam method".

The water vapor transmission rate of the first film is 0.01 (g/m²/24hr) or more and 1 (g/m²/24hr) or less. The WVTR is preferably 0.8 (g/m²/24hr) or less, more preferably 0.6 (g/m²/24hr) or less. It is also preferably 0.05 (g/m²/24hr) or more, more preferably 0.1 (g/m²/24hr) or more. This WVTR is a value measured by the method described in the Examples below. In addition, since the first film is peeled off and discarded before sealing the electronic device, when the value is in this range, it is possible to simultaneously suppress the absorption of water in the resin composition layer during storage and reduce costs. When the WVTR is less than 0.01 (g/m²/24hr), the thickness of the inorganic film increases, or more inorganic film layers are provided in a multi-layer structure, so that the total thickness of the inorganic film in the film increases, and warping is likely to occur. By setting the WVTR to 1 (g/m²/24hr) or less, the life of the moisture barrier performance of the resin composition layer can be extended. When the WVTR exceeds 1 (g/m²/24hr), the hygroscopic filler contained in the resin composition layer absorbs water vapor present in the atmosphere, and the original performance cannot be exhibited.

In the present invention, the first film is used as a support when the resin composition varnish is applied and dried to form a resin composition layer, and is peeled off when sealing the electronic device. That is, the first film is used as a support for coating the resin composition varnish. When a barrier film with high moisture permeability resistance is used as a support for varnish coating, warping is likely to occur when heated, and there is a risk that the barrier layer will be damaged during coating, resulting in a decrease in performance for sealing the electronic device. In addition, when the second film has a multilayer structure, the AOI detects air bubbles in the substrate of the laminated structure, and therefore, the suitability of the resin composition layer for AOI evaluation is low. In addition, when the barrier layer is a metal foil, the resin composition layer cannot be evaluated by AOI because it does not have light transmittance. In addition, when the glass plate is thin, it is brittle, and when it is thick, it is difficult to be rolled, making difficult the application to a coating device, and use thereof as a support for coating becomes difficult. These problems can be solved by using the first film as a support when forming the resin composition. In addition, even when the first film is used as a support for forming a resin composition layer, the barrier layer may be damaged, but since the first film is ultimately peeled off and does not remain on the electronic device, no problem occurs in the sealing performance of the electronic device. Also, it is disadvantageous in terms of cost to use a highly moisture-resistant barrier film or glass plate as a layer that is peeled off and discarded.

### <Second film>

In the resin sheet of the present invention, the second film is a film that is incorporated into the electronic device as a barrier film when sealing the electronic device, does not have a release layer, and has a water vapor transmission rate of less than 0.01 (g/m²/24hr). The second film may be a film having the same transparency as the first film, or may be a film having no transparency.

The WVTR of the second film is more preferably 0.005 (g/m²/24hr) or less, further preferably 0.001 (g/m²/24hr) or less, particularly preferably 0.0005 (g/m²/24hr) or less. There is no particular lower limit for the WVTR of the second film, and a lower value is preferred and 0 (g/m²/24hr) is the most preferred. This WVTR is a value measured by the method described in the Examples below.

The second film is preferably a film having a substrate and a barrier layer. As used herein, the substrate means the portion of the film other than the barrier layer.

The substrate may be a single layer film or a laminated film. For example, the substrate may have a laminated structure in which plastic films are laminated using an adhesive. There is no particular limitation on the adhesive, and a commercially available adhesive can be used. Examples of the substrate include plastic films of polyolefins such as polyethylene and polypropylene (PP), polyesters such as polyethylene terephthalate (PET) and polyethylene naphthalate (PEN), polycarbonate (PC), polyimide (PI), cycloolefin polymer (COP), and polyvinyl chloride. The plastic film may be one type or two or more types. The substrate is preferably a polyethylene terephthalate film, a cycloolefin polymer film, a polyethylene naphthalate film, or a polycarbonate film, more preferably a polyethylene terephthalate film or a cycloolefin polymer film. The thickness of the substrate (when the substrate has a laminated structure, the thickness of the entire substrate, and when the second film has a multilayer structure of an inorganic film and a substrate, the total thickness of the substrate portion) is preferably 10 to 150 µm, more preferably 15 to 125 µm, further preferably 20 to 100 µm.

Examples of the barrier layer in the second film include metal foils (e.g., aluminum foil, copper foil), inorganic films such as silica-deposited film, silicon nitride film, and silicon oxide film, organic-inorganic mixed films containing inorganic substances such as metal oxides and organic substances such as organic resins, and the like. The barrier layer may be composed of a plurality of inorganic film layers. The barrier layer may also be composed of organic substances and inorganic substances. The second film may have a multi-layer structure in which inorganic films and substrates are alternately laminated. In particular, when the inorganic film is formed by a chemical vapor deposition method or a physical vapor deposition method, it is preferable to have a multi-layer structure in which inorganic films and substrates are alternately laminated in order to prevent cracks in the inorganic film. When a metal foil is used as the barrier layer, the total thickness of the barrier layer in the second film is preferably 15 um or more and 100 um or less, more preferably 20 um or more and 90 um or less, further preferably 25 um or more and 80 um or less. When the barrier layer is other than a metal foil (for example, an inorganic film formed by a chemical vapor deposition method or a physical vapor deposition method) or an organic-inorganic mixed film, the total thickness of the barrier layer in the second film is preferably 1 to 10 µm, more preferably 1.5 to 8 µm, further preferably 2 to 5 µm.

The second film having a WVTR of less than 0.01 (g/m²/24hr), particularly a second film having a WVTR of 0.0005 (g/m²/24hr) or less, can be produced by laminating an inorganic film such as silicon oxide (silica), aluminum oxide, magnesium oxide, silicon nitride, silicon nitride oxide, SiCN, or amorphous silicon on the surface of a substrate by a chemical vapor deposition method (e.g., chemical vapor deposition method using heat, plasma, ultraviolet light, vacuum heat, vacuum plasma, or vacuum ultraviolet light) or a physical vapor deposition method (e.g., vacuum deposition method, sputtering method, ion plating method, laser deposition method, molecular beam epitaxy method) (see, for example, JP-A-2016-185705, Japanese Patent No. 5719106, Japanese Patent No. 5712509, Japanese Patent No. 5292358, etc.). Alternatively, the second film may be formed by applying a coating liquid consisting of an inorganic material such as a metal oxide and an organic resin to the surface of a substrate (single-layer plastic film) and drying the coating liquid to form an organic-inorganic mixed film (see, for example, Japanese Patent No. 4028353). Examples of the second film having a WVTR of less than 0.01 (g/m²/24hr), particularly a second film having a WVTR of 0.0005 (g/m²/24hr) or less, include metal foils such as US foil, aluminum foil, copper foil, or a second film produced by a method including laminating a substrate and a metal foil with an adhesive.

The second film used may be a commercially available product. For example, "AL1N30 with PET" manufactured by Toyo Aluminum Co., Ltd., "X-BARRIER" manufactured by Mitsubishi Plastics, Inc., "Verreal" manufactured by Reiko Co., Ltd., "3EC-III" manufactured by Mitsui Kinzoku Co., Ltd., and the like can be mentioned.

From the viewpoints of ease of handling and winding up the resin sheet into a roll, the thickness of the second film is preferably 10 to 150 µm, more preferably 15 to 125 um, further preferably 20 to 100 µm.

In one embodiment of the present invention, a glass plate can be used instead of the second film. That is, the resin sheet of the present invention has a first film, a resin composition layer, and a glass plate, and the resin composition layer is present between the first film and the glass plate. The glass plate is incorporated into the electronic device as a barrier layer when sealing the electronic device, and does not have a release layer. The thickness of the glass plate is preferably 10 to 1000 µm, more preferably 50 to 900 µm, further preferably 100 to 800 um. When the thickness of the glass plate is in this range, the handleability is good, which is preferable. In addition, when the resin sheet is wound into a roll as a product form of a roll-shaped resin sheet, the thickness of the glass plate is preferably 200 um or less, more preferably 100 um or less. When the glass plate is too thick to be wound, it can be made into a sheet. Alternatively, a resin sheet precursor using the third film described below instead of the glass plate (or the second film) may be sold, transported, stored, and the like as a product form, and the third film may be peeled off before use, and a glass plate (or the second film) may be attached to the resin sheet to be used. The water vapor transmission rate of the glass plate is generally less than 0.01 (g/m²/24hr), and may be 0.005 (g/m²/24hr) or less, 0.001 (g/m²/24hr) or less, 0.0005 (g/m²/24hr) or less, or 0 (g/m²/24hr).

### <Resin composition layer>

The resin constituting the resin composition layer used in the resin sheet of the present invention is not particularly limited as long as the effects of the present invention are exhibited, and examples thereof include thermoplastic resins (such as polyolefin-based resin), thermosetting resins (such as epoxy resin), and the like. The resin composition layer preferably contains a polyolefin-based resin and/or an epoxy resin, more preferably contains a polyolefin-based resin.

### (Polyolefin-based resin)

The polyolefin-based resin that can be used in the present invention is not particularly limited as long as it has an olefin-derived skeleton. For example, the polyolefin-based resin described in Patent Literature 1 is a known example. The olefin is preferably a monoolefin having one olefinic carbon-carbon double bond and/or a diolefin having two olefinic carbon-carbon double bonds. As the monoolefin, preferably, α-olefins such as ethylene, propylene, 1-butene, isobutylene (isobutene), 1-pentene, 1-hexene, 1-heptene, and 1-octene are mentioned, and as the diolefin, preferably, 1,3-butadiene, isoprene, 1,3-pentadiene, 2,3-dimethylbutadiene, and the like can be mentioned. The olefin-derived skeleton in the polyolefin-based resin may be one type or two or more types. Only one type of polyolefin-based resin may be used, or two or more types thereof may be used in combination.

The polyolefin-based resin may be a homopolymer, or a copolymer such as random copolymer, block copolymer, and the like. As the copolymer, a copolymer of two or more kinds of olefins, and a copolymer of olefin and a monomer other than olefin such as non-conjugated diene and styrene can be mentioned. Examples of a preferred copolymer include ethylene-non-conjugated diene copolymer, ethylene-propylene copolymer, ethylene-propylene-non-conjugated diene copolymer, ethylene-butene copolymer, propylene-butene copolymer, propylene-butene-non-conjugated diene copolymer, styrene-isobutylene copolymer, styrene-isobutylene-styrene copolymer, and the like.

Examples of polyolefin-based resins include isobutylene-modified resins described in WO 2011/62167, styrene-isobutylene-modified resins described in WO 2013/108731, and the like.

The polyolefin-based resin is preferably a polybutene-based resin or a polypropylene-based resin. As used herein, the "polybutene resin" refers to a resin in which the main unit (the unit with the largest content) among all olefin monomer units constituting the polymer is derived from butene, and the "polypropylene resin" refers to a resin in which the main unit (the unit with the largest content) among all olefin monomer units constituting the polymer is derived from propylene.

In addition, when the polybutene-based resin is a copolymer, examples of the monomer other than butene include styrene, ethylene, propylene, isoprene, and the like. In the case where the polypropylene-based resin is a copolymer, examples of the monomer other than propylene include ethylene, butene, isoprene, and the like.

From the aspect of imparting superior properties such as adhesiveness, adhesive wet-heat resistance, and the like, the polyolefin-based resin preferably contains a polyolefin-based resin having an acid anhydride group (i.e., carbonyloxycarbonyl group (-CO-O-CO-)) and/or a polyolefin-based resin having an epoxy group. Examples of the acid anhydride group include a group derived from succinic anhydride, a group derived from maleic anhydride, a group derived from glutaric anhydride, and the like. The polyolefin-based resin can have one or more types of acid anhydride groups. The polyolefin-based resin having an acid anhydride group is obtained by, for example, graft-modifying a polyolefin-based resin with an unsaturated compound having an acid anhydride group under radical reaction conditions. In addition, an unsaturated compound having an acid anhydride group may be subjected to radical copolymerization together with olefin, etc. Similarly, the polyolefin-based resin having an epoxy group is obtained by, for example, graft-modifying a polyolefin-based resin with an unsaturated compound having an epoxy group such as glycidyl (meth)acrylate, 4-hydroxybutyl acrylate glycidyl ether, and allyl glycidyl ether, under radical reaction conditions. In addition, an unsaturated compound having an epoxy group may be subjected to radical copolymerization together with olefin, etc. Only one type of the polyolefin-based resin may be used, or two or more types thereof may be used in combination, and a polyolefin-based resin having an acid anhydride group and a polyolefin-based resin having an epoxy group may be used in combination.

As the polyolefin-based resin having an acid anhydride group, a polybutene resin having an acid anhydride group and a polypropylene resin having an acid anhydride group are preferred. As the polyolefin-based resin having an epoxy group, a polybutene resin having an epoxy group and a polypropylene resin having an epoxy group are preferred.

The concentration of an acid anhydride group in a polyolefin-based resin having an acid anhydride group is preferably 0.05 to 10 mmol/g, more preferably 0.1 to 5 mmol/g. The concentration of an acid anhydride group is obtained according to the description of JIS K 2501 and from the acid number value which is defined as the number in mg of potassium hydroxide necessary for neutralizing the acid present in 1 g of the resin. The amount of a polyolefin-based resin having an acid anhydride group in the polyolefin-based resin is preferably 0 to 70% by mass, more preferably 10 to 50% by mass.

The concentration of an epoxy group in a polyolefin-based resin having an epoxy group is preferably 0.05 to 10 mmol/g, more preferably 0.1 to 5 mmol/g. The concentration of an epoxy group is obtained from the epoxy equivalents obtained based on JIS K 7236-1995. The amount of a polyolefin-based resin having an epoxy group in the polyolefin-based resin is preferably 0 to 70% by mass, more preferably 10 to 50% by mass.

From the viewpoint of imparting superior properties such as sealing performance, the polyolefin-based resin particularly preferably contains both a polyolefin-based resin having an acid anhydride group and a polyolefin-based resin having an epoxy group. Such a polyolefin-based resin can form a crosslinked structure by reacting the acid anhydride group and the epoxy group by heating, and form a sealing layer having superior sealing performance. Although the crosslinked structure can be formed after sealing, for example, when the object to be sealed is a heat-sensitive object such as electronic device, it is preferable to seal the object using a resin sheet and form a crosslinked structure when producing the resin sheet.

The ratio of the polyolefin-based resin having an acid anhydride group to the polyolefin-based resin having an epoxy group is not particularly limited as long as an appropriate crosslinked structure can be formed. The molar ratio of the epoxy group to the acid anhydride group (epoxy group:acid anhydride group) is preferably 100:10 to 100:400, more preferably 100:25 to 100:350, particularly preferably 100:40 to 100:300.

In the resin composition layer used in the resin sheet of the present invention, when a polyolefin-based resin having an epoxy group is used, a polyolefin-based resin having a functional group (excluding an acid anhydride group) capable of reacting with the epoxy group may be used. Examples of the functional group include hydroxyl group, phenolic hydroxyl group, amino group, carboxyl group, and the like.

In the resin composition layer used in the resin sheet of the present invention, when a polyolefin-based resin having an acid anhydride group is used, a polyolefin-based resin having a functional group (excluding an epoxy group) capable of reacting with the acid anhydride group may be used. Examples of the functional group include hydroxyl group, primary or secondary amino group, thiol group, and oxetane group.

While the number average molecular weight of polyolefin-based resin is not particularly limited, 1,000,000 or less is preferred, 750,000 or less is more preferred, 500,000 or less is still more preferred, 400,000 or less is further preferred, 300,000 or less is further more preferred, 200,000 or less is particularly preferred, and 150,000 or less is most preferred, to afford good coatability of varnish of the resin composition and good compatibility with other components in the resin composition. On the other hand, from the viewpoints of preventing repelling during application of the resin composition varnish, exhibiting the sealing performance of the resin composition layer formed, and improving the mechanical strength, the number average molecular weight is preferably 1,000 or more, and more preferably 2,000 or more. The number average molecular weight in the present invention is measured by gel permeation chromatography (GPC) method (based on polystyrene). Specifically, the number average molecular weight can be measured by the GPC method using LC-9A/RID-6A manufactured by SHIMADZU CORPORATION as a measuring apparatus, Shodex K-800P/K-804L/K-804L manufactured by Showa Denko K.K. as a column, and toluene and the like as a mobile phase at a column temperature of 40°C, and calculated using the analytical curve of standard polystyrene.

From the aspect of suppressing a decrease in fluidity due to the thickening of the varnish, the olefin-based resin in the present invention is preferably non-crystalline. As used herein, non-crystalline means that the polyolefin-based resin does not have a clear melting point. For example, a polyolefin-based resin that shows no clear peak when the melting point is measured by DSC (differential scanning calorimetry) can be used.

Specific examples of the polyolefin-based resin are shown below. Specific examples of the propylene-based resin include "T-YP341" manufactured by SEIKO PMC CORPORATION (glycidyl methacrylate-modified propylene-butene random copolymer, amount of butene unit per total 100% by mass of propylene unit and butene unit: 29% by mass, epoxy group concentration: 0.638 mmol/g, number average molecular weight: 155,000), "T-YP279" manufactured by SEIKO PMC CORPORATION (maleic anhydride-modified propylene-butene random copolymer, amount of butene unit per total 100% by mass of propylene unit and butene unit: 36% by mass, acid anhydride group concentration: 0.464 mmol/g, number average molecular weight: 35,000), "T-YP276" manufactured by SEIKO PMC CORPORATION (glycidyl methacrylate-modified propylene-butene random copolymer, amount of butene unit per total 100% by mass of propylene unit and butene unit: 36% by mass, epoxy group concentration: 0.638 mmol/g, number average molecular weight: 57,000), "T-YP312" manufactured by SEIKO PMC CORPORATION (maleic anhydride-modified propylene-butene random copolymer, amount of butene unit per total 100% by mass of propylene unit and butene unit: 29% by mass, acid anhydride group concentration: 0.464 mmol/g, number average molecular weight: 60,900), "T-YP313" manufactured by SEIKO PMC CORPORATION (glycidyl methacrylate-modified propylene-butene random copolymer, amount of butene unit per total 100% by mass of propylene unit and butene unit: 29% by mass, epoxy group concentration: 0.638 mmol/g, number average molecular weight: 155,000), and the like.

Specific examples of the polybutene-based resin include "HV-1900" manufactured by ENEOS Corporation (former company name "JXTG energy") (polybutene, number average molecular weight: 2,900), "HV-300M" manufactured by TOHO Chemical Industry Co., Ltd. (maleic anhydride-modified liquid polybutene (modified product of "HV-300" (number average molecular weight: 1,400)), number average molecular weight: 2,100, number of carboxy groups constituting the acid anhydride group: 3.2/1 molecule, acid value: 43.4 mg KOH/g, acid anhydride group concentration: 0.77 mmol/g), "Oppanol B100" manufactured by BASF (polyisobutylene, viscosity average molecular weight :1,110,000), "N50SF" (polyisobutylene, viscosity average molecular weight :400,000) manufactured by BASF, and the like.

Specific examples of the styrene-isobutylene copolymer include "SIBSTAR T102" manufactured by KANEKA CORPORATION (styrene-isobutylene-styrene block copolymer, number average molecular weight: 100,000, styrene content: 30% by mass), "T-YP757B" manufactured by SEIKO PMC CORPORATION (maleic anhydride-modified styrene-isobutylene-styrene block copolymer, acid anhydride group concentration: 0.464 mmol/g, number average molecular weight: 100,000), "T-YP766" manufactured by SEIKO PMC CORPORATION (glycidyl methacrylate-modified styrene-isobutylene-styrene block copolymer, epoxy group concentration :0.638 mmol/g, number average molecular weight: 100,000), "T-YP8920" manufactured by SEIKO PMC CORPORATION (maleic anhydride-modified styrene-isobutylene-styrene copolymer, acid anhydride group concentration: 0.464 mmol/g, number average molecular weight: 35,800), and "T-YP8930" manufactured by SEIKO PMC CORPORATION (glycidyl methacrylate-modified styrene-isobutylene-styrene copolymer, epoxy group concentration: 0.638 mmol/g, number average molecular weight: 48,700) .

The content of polyolefin-based resin in the resin composition layer used in the resin sheet of the present invention is not particularly limited. However, from the viewpoint of sealing performance and handling of the resin composition layer, the content is preferably 5% by mass or more, more preferably 10% by mass or more, further preferably 15% by mass or more, preferably 50% by mass or less, more preferably 40% by mass or less, further preferably 35% by mass or less, based on 100% by mass of the non-volatile content of the resin composition layer.

### (Epoxy resin)

The epoxy resin may be any as long as it has two or more epoxy groups on average per one molecule. Examples of the epoxy resin include bisphenol A type epoxy resin, hydrogenated bisphenol A type epoxy resin, biphenyl type epoxy resin, biphenylaralkyl type epoxy resin, naphthol type epoxy resin, naphthalene type epoxy resin, bisphenol F type epoxy resin, phosphorus-containing epoxy resin, bisphenol S type epoxy resin, aromatic glycidyl amine type epoxy resin (e.g., tetraglycidyl diaminodiphenylmethane, triglycidyl-p-aminophenol, diglycidyl toluidine, diglycidyl aniline, etc.), alicyclic epoxy resin, aliphatic chain epoxy resin, phenol novolac type epoxy resin, cresol novolac type epoxy resin, bisphenol A novolac type epoxy resin, epoxy resin having butadiene structure, diglycidyl etherified product of bisphenol, diglycidyl etherified product of naphthalenediol, diglycidyl etherified products of phenols, and diglycidyl etherified products of alcohols, and alkyl-substituted products, halides, and hydrogenated products of these epoxy resins, and the like. The epoxy resin may be only one kind, or two or more kinds.

From the aspects of reactivity and the like, the epoxy equivalents of the epoxy resin is preferably 50 to 5,000, more preferably 50 to 3,000, further preferably 80 to 2,000, further more preferably 100 to 1,000, yet more preferably 120 to 1,000, particularly preferably 140 to 300. The "epoxy equivalent" is the number of grams (g/eq) of the resin containing 1 gram equivalent of an epoxy group, which is measured according to the method defined in JIS K 7236. The weight average molecular weight of the epoxy resin is preferably not more than 5,000.

The epoxy resin may be in a liquid state or a solid state, or both a liquid epoxy resin and a solid epoxy resin may also be used. As used herein, the "liquid state" and "solid state" are the states of the epoxy resin at room temperature (25°C) and normal pressure (1 pressure).

The amount of the epoxy resin is not particularly limited. When an epoxy resin is used, the amount thereof is preferably 20 to 80% by mass, more preferably 30 to 70% by mass, further preferably 50 to 65% by mass, with respect to 100% by mass of the non-volatile content of the resin composition.

### (Hygroscopic filler)

The resin composition layer used in the resin sheet of the present invention may contain a hygroscopic filler. Examples of the hygroscopic filler include calcium oxide, hydrotalcite, magnesium oxide, and molecular sieves. The hygroscopic filler may be used alone or two or more in combination. The content of the hygroscopic filler is preferably 0 to 40% by mass, more preferably 0 to 30% by mass, further preferably 0 to 20% by mass, based on 100% by mass of the nonvolatile content of the resin composition layer. The hygroscopic filler is preferably calcium oxide.

Hydrotalcite can be classified into non-calcined hydrotalcite, half-calcined hydrotalcite, and calcined hydrotalcite.

The non-calcined hydrotalcite is a metal hydroxide having a layer-like crystal structure represented by, for example, natural hydrotalcite (Mg₆Al₂(OH)₁₆CO₃·4H₂O), and composed of, for example, a layer [Mg_{1-X}Al_{X}(OH)₂]^{X+} to be the basic skeleton and an intermediate layer [(CO₃)_{X/2}·mH₂O]^{X-}. The non-calcined hydrotalcite is a concept including hydrotalcite-like compounds such as synthetic hydrotalcite and the like. Examples of the hydrotalcite-like compound include those represented by the following formula (I) and the following formula (II).

[M²⁺₁₋ₓM³⁺ₓ(OH)₂]^{x+}·[(Aⁿ⁻)_{x/n}·mH₂O]^{x-} (I)

wherein M²⁺ is a divalent metal ion such as Mg²⁺, Zn²⁺ or the like, M³⁺ is a trivalent metal ion such as Al³⁺, Fe³⁺ or the like, Aⁿ⁻ is an n valent anion such as CO₃²⁻, Cl⁻, NO₃⁻ or the like, 0<x<1, 0≤m<1, and n is a positive number.

In the formula (I), M²⁺ is preferably Mg²⁺, M³⁺ is preferably Al³⁺, and Aⁿ⁻ is preferably CO₃²⁻.

M²⁺ₓAl₂(OH)_{2x+6-nz}(Aⁿ⁻)_{z}·mH₂O (II)

wherein M²⁺ is a divalent metal ion such as Mg²⁺, Zn²⁺ or the like, Aⁿ⁻ is an n valent anion such as CO₃²⁻, Cl⁻, NO₃⁻ or the like, x is a positive number of two or more, z is a positive number of two or below, m is a positive number, and n is a positive number.

In the formula (II), M²⁺ is preferably Mg²⁺, and Aⁿ⁻ is preferably CO₃²⁻.

The half-calcined hydrotalcite refers to a metal hydroxide having a layer-like crystal structure in which the amount of interlayer water is decreased or eliminated, which is obtained by calcination of non-calcined hydrotalcite. The "interlayer water" refers to, when described using a composition formula, "H₂O" described in the composition formulas of the aforementioned non-calcined natural hydrotalcite and hydrotalcite-like compound.

On the other hand, the calcined hydrotalcite refers to a metal oxide having an amorphous structure in which not only the interlayer water but also the hydroxyl group are eliminated by condensation dehydration, and the metal oxide is obtained by calcination of non-calcined hydrotalcite or half-calcined hydrotalcite.

The non-calcined hydrotalcite, half-calcined hydrotalcite, and calcined hydrotalcite can be distinguished by the saturated water absorption. The saturated water absorption of the half-calcined hydrotalcite is not less than 1% by mass and less than 20% by mass. The saturated water absorption of the non-calcined hydrotalcite is less than 1% by mass, and the saturated water absorption of the calcined hydrotalcite is not less than 20% by mass.

The "saturated water absorption" refers to the rate of mass increase with respect to the initial mass, when 1.5 g of a measurement sample (e.g., half-calcined hydrotalcite) is weighed with a balance and, after measuring its initial mass, left standing in a compact environment tester (SH-222 manufactured by ESPEC Corp) set to 60°C, 90%RH (relative humidity) for 200 hr under atmospheric pressure. It can be determined by the following formula (i): saturated water absorption (% by mass) = 100 × (mass after moisture absorption - initial mass)/initial mass

The saturated water absorption of the half-calcined hydrotalcite is preferably not less than 3% by mass and less than 20% by mass, more preferably not less than 5% by mass and less than 20% by mass.

In addition, the non-calcined hydrotalcite, half-calcined hydrotalcite, and calcined hydrotalcite can be distinguished by thermogravimetric reduction measured by thermogravimetric analysis. The thermogravimetric reduction of the half-calcined hydrotalcite at 280°C is less than 15% by mass, and the thermogravimetric reduction at 380°C is not less than 12% by mass. On the other hand, the thermogravimetric reduction of the non-calcined hydrotalcite at 280°C is not less than 15% by mass, and the thermogravimetric reduction of the calcined hydrotalcite at 380°C is less than 12% by mass.

The thermogravimetric analysis can be performed using TG/DTA EXSTAR6300 manufactured by Hitachi High-Tech Science Corporation, by weighing 5 mg of hydrotalcite in an aluminum sample pan which is open without a lid, and standing same under the conditions of atmosphere with a nitrogen flow at 200 mL/min at a temperature rise rate of 10°C/min from 30°C to 550°C. The thermogravimetric reduction can be determined by the following formula (ii): thermogravimetric reduction (% by mass) = 100 × (mass before heating - mass when given temperature is reached)/mass before heating

In addition, the non-calcined hydrotalcite, half-calcined hydrotalcite, and calcined hydrotalcite can be distinguished by the peak and relative intensity ratio measured by powder X-ray diffraction. The half-calcined hydrotalcite shows split two peaks or a peak with a shoulder by combining two peaks, at 20 of about 8 to 18° by powder X-ray diffraction, and a relative intensity ratio (small angle side diffraction intensity/large angle side diffraction intensity) of 0.001 to 1,000 between the diffraction intensity of the peak or shoulder appearing on the small angle side (=small angle side diffraction intensity), and the diffraction intensity of the peak or shoulder appearing on the large angle side (=large angle side diffraction intensity). On the other hand, the non-calcined hydrotalcite has only one peak near 8 to 18°, or the relative intensity ratio of the diffraction intensity between the peak or shoulder appearing on the small angle side and the peak or shoulder appearing on the large angle side falls outside the aforementioned range. The calcined hydrotalcite does not have a characteristic peak in the region of 8° to 18°, but has a characteristic peak at 43°. The powder X-ray diffraction was measured by a powder X-ray diffractometer (Empyrean manufactured by PANalytical) under the conditions of anticathode CuKα (1.5405Å), voltage: 45 V, electric current: 40 mA, sampling width: 0.0260°, scan rate: 0.0657°/s, measurement diffraction angle range (2θ): 5.0131 to 79.9711°. The peak search can be performed using the peak search function of the software attached to the diffractometer and under the conditions of "minimum significance: 0.50, minimum peak chip: 0.01°, maximum peak chip: 1.00°, peak base width: 2.00°, method: secondary differential minimum value".

The BET specific surface area of the half-calcined hydrotalcite is preferably 1 to 250 m²/g, more preferably 5 to 200 m²/g. The BET specific surface area thereof can be obtained by adsorbing nitrogen gas to the sample surface according to the BET method and using a specific surface area measuring apparatus (Macsorb HM Model-1210 manufactured by MOUNTECH Co., Ltd.), and calculating by the BET multipoint method.

The particle size of the half-calcined hydrotalcite is preferably 1 to 1,000 nm, more preferably 10 to 800 nm. The particle size thereof is the median diameter of particle size distribution when the particle size distribution is produced by laser diffraction scattering particle size distribution measurement (JIS Z 8825) on the volume standard.

As the half-calcined hydrotalcite, those surface-treated with a surface treating agent can be used. As a surface treating agent to be used for the surface treatment, for example, higher fatty acid, alkylsilane, a silane coupling agent, and the like can be used, of which higher fatty acid and alkylsilane are preferred. One or more kinds of the surface treating agents can be used.

As the half-calcined hydrotalcite, commercially available products can be used. Examples of the commercially available product include "DHT-4C" and "DHT-4A-2" manufactured by Kyowa Chemical Industry Co., Ltd., and the like.

As the calcium oxide, commercially available products can be used. Examples of the commercially available product include "QC-X" manufactured by Inoue Calcium Corporation; "Moist Top #10" manufactured by Sankyo Flour Milling Co., Ltd.; "HAL-G", "HAL-J", and "HAL-F" manufactured by Yoshizawa Lime Industry Co., Ltd.; and "CaO Nano Powder" manufactured by Filgen, and the like.

In the present invention, a mixture containing calcium oxide may be used as the hygroscopic filler. Examples of such mixture include calcined dolomite (mixture containing calcium oxide and magnesium oxide). Calcined dolomite is available from, for example, Yoshizawa Lime Industry CO., LTD.

The particle size of calcium oxide and the particle size of a mixture containing calcium oxide (hereinafter sometimes referred to as "calcium oxide, etc.") are each preferably 0.03 to 10 µm, more preferably 0.05 to 5 µm, further preferably 0.1 to 3 µm, in order to prevent calcium oxide, etc. from damaging electronic devices in the sealing process and to increase the interfacial laminating strength between calcium oxide, etc. and resin. These particle sizes are the median sizes of the particle size distribution when the particle size distribution is created on a volume basis by laser diffraction scattering particle size distribution measurement (JIS Z 8825).

Calcium oxide is a hygroscopic inorganic particle that is essential for exhibiting high moisture blocking property. Unlike half-calcined hydrotalcite, calcium oxide absorbs moisture irreversibly, and therefore, once it absorbs moisture, its moisture absorption performance decreases. Therefore, it is necessary to form a resin composition layer at a high temperature in a short time. On the other hand, when the substrate is a first film that is a plastic film of two or more layers, the linear thermal expansion coefficients of each layer are different, and therefore, warping of the substrate occurs more significantly under high temperature exposure. As described above, these problems can be solved by using a single-layer plastic film as the substrate of the first film and appropriately setting the thickness and WVTR (barrier property) of the first film.

### (Tackifier)

The resin composition layer used in the resin sheet of the present invention may further contain a tackifier. The tackifier is also called a tackifier, and is a component that imparts adhesiveness to the composition. While the tackifier is not particularly limited, terpene resin, modified terpene resin (hydrogenated terpene resin, terpene phenol copolymer resin, aromatic-modified terpene resin etc.), coumarone resin, indene resin, petroleum resin (aliphatic petroleum resin, hydrogenated alicyclic petroleum resin, aromatic petroleum resin, aliphatic-aromatic copolymer petroleum resin, alicyclic petroleum resin, dicyclopentadiene-based petroleum resin and hydrogenated product thereof, etc.) are preferably used.

Examples of the commercially available product that can be used as the tackifier include the following. YS resin PX and YS resin PXN (both manufactured by YASUHARA CHEMICAL Co., Ltd.), and the like as the terpene resin; YS resin TO and TR series (both manufactured by YASUHARA CHEMICAL Co., Ltd.), and the like as the aromatic modified terpene resin; Clearon P, Clearon M, and Clearon K series (all manufactured by YASUHARA CHEMICAL Co., Ltd.), and the like as the hydrogenated terpene resin; YS Polyster 2000, Polyster U, Polyster T, Polyster S, and Mighty Ace G (all manufactured by YASUHARA CHEMICAL Co., Ltd.), and the like as the terpenephenol copolymer resin; Escorez 5300 series and 5600 series (both manufactured by Exxon Mobil Corporation), and the like as the hydrogenated alicyclic petroleum resin; ENDEX155 (manufactured by Eastman Chemical Company) and the like as the aromatic petroleum resin; Quintone D100 (manufactured by Nippon Zeon Co., Ltd.) and the like as the aliphatic-aromatic copolymer petroleum resin; Quintone 1325 and Quintone 1345 (both manufactured by Nippon Zeon Co., Ltd.), and the like as the alicyclic petroleum resin; ARKON P100, ARKON P125, ARKON P140, and TFS13-030 (all manufactured by Arakawa Chemical Industries, Ltd.), and the like as the saturated hydrocarbon resins.

From the viewpoint of softening the resin composition layer in the lamination step of the resin composition layer and having the desired heat resistance, the softening point of the tackifier is preferably 50 to 200°C, more preferably 90 to 180°C, further preferably 100 to 150°C. The softening point is measured by the ring and ball method in accordance with JIS K2207.

Only one type of the tackifier may be used, or two or more types thereof may be used in combination. The content of the tackifier in the resin composition layer is not particularly limited. However, from the viewpoint of maintaining good sealing performance of the resin composition layer, when a tackifier is used, the content is preferably 50% by mass or less, more preferably 40% by mass or less, further preferably 30% by mass or less, based on 100% by mass of the nonvolatile content of the resin composition layer. On the other hand, from the viewpoint of having sufficient adhesiveness, when a tackifier is used, the content is preferably 5% by mass or more, more preferably 10% by mass or more, based on 100% by mass of the nonvolatile content of the resin composition layer.

From the viewpoint of adhesiveness, sealing performance, transparency, and the like of the resin composition layer, petroleum resin is preferred. Examples of petroleum resin include aliphatic petroleum resin, aromatic petroleum resin, aliphatic aromatic copolymer petroleum resin, alicyclic petroleum resin, and the like. From the viewpoint of adhesiveness, sealing performance, compatibility, and the like of the resin composition layer, aromatic petroleum resin, aliphatic aromatic copolymer petroleum resin, and alicyclic petroleum resin are more preferred. Furthermore, from the viewpoint of improving transparency, alicyclic petroleum resin is particularly preferred. As the alicyclic petroleum resin, a product obtained by hydrogenating an aromatic petroleum resin can also be used. In this case, the hydrogenation rate of the alicyclic petroleum resin is preferably 30 to 99%, more preferably 40 to 97%, further preferably 50 to 90%. When the hydrogenation rate is too low, a problem of reduced transparency tends to occur due to coloring, and when the hydrogenation rate is too high, the production costs tends to increase. The hydrogenation rate can be determined from the ratio of the ¹H-NMR peak intensity of hydrogen in the aromatic ring before and after hydrogenation. As the alicyclic petroleum resin, in particular, cyclohexane ring-containing hydrogenated petroleum resin and dicyclopentadiene-based hydrogenated petroleum resin are preferred. Only one type of the petroleum resin may be used, or two or more types thereof may be used in combination. The number average molecular weight Mn of the petroleum resin is preferably 100 to 2,000, more preferably 700 to 1,500, further preferably 500 to 1,000.

### (Curing agent and/or curing accelerator)

The resin composition layer used in the resin sheet of the present invention may contain a curing agent and/or a curing accelerator (preferably a curing accelerator). Only one type of the curing agent and the curing accelerator may be used or two or more types thereof may be used in combination. Examples of the curing agent include imidazole compounds, tertiary or quaternary amine compounds, dimethylurea compounds, organic phosphine compounds, primary or secondary amine compounds, and the like. Examples of the curing accelerator include imidazole compounds, tertiary or quaternary amine compounds, dimethylurea compounds, organic phosphine compounds, and the like.

Examples of the imidazole compound as the curing agent and/or the curing accelerator in the present invention include 1H-imidazole, 2-methylimidazole, 2-phenyl-4-methylimidazole, 2-ethyl-4-methylimidazole, 1-cyanoethyl-2-ethyl-4-methylimidazole, 2-undecylimidazole, 1-cyanoethyl-2-undecylimidazole, 1-cyanoethyl-2-undecylimidazole, 1-cyanoethyl-2-undecylimidazolium trimellitate, 2,4-diamino-6-(2'-undecylimidazolyl-(1'))-ethyl-s-triazine, 2-phenyl-4,5-bis(hydroxymethyl)imidazole, 1-benzyl-2-methylimidazole, 1-benzyl-2-phenylimidazole, 2-phenylimidazole, 2-dodecylimidazole, 2-heptadecylimidazole, 1,2-dimethylimidazole, 2-phenyl-4-methyl-5-hydroxymethylimidazole, 2,4-diamino-6-(2'-methylimidazolyl-(1')-ethyl-s-triazine, 2,4-diamino-6-(2'-methylimidazolyl-(1'))-ethyl-s-triazine isocyanuric acid adduct, and the like. Specific examples of the imidazole compound include Curesol 2MZ, 2P4MZ, 2E4MZ, 2E4MZ-CN, C11Z, C11Z-CN, C11Z-CNS, C11Z-A, 2PHZ, 1B2MZ, 1B2PZ, 2PZ, C17Z, 1.2DMZ, 2P4MHZ-PW, 2MZ-A, and 2MA-OK (all manufactured by SHIKOKU CHEMICALS CORPORATION), and the like.

While the tertiary or quaternary amine compounds as the curing agent and/or curing accelerator in the present invention are not particularly limited, examples thereof include quaternary ammonium salts such as tetramethylammonium bromide and tetrabutylammonium bromide; diazabicyclo compounds such as DBU (1,8-diazabicyclo[5.4.0]undecene-7), DBN (1,5-diazabicyclo[4.3.0]nonene-5), DBU-phenol salt, DBU-octylate, DBU-p-toluenesulfonate, DBU-formate, and DBU-phenol novolac resin salt; tertiary amines such as benzyldimethylamine, 2-(dimethylaminomethyl)phenol, and 2,4,6-tris (dimethylaminomethyl)phenol(TAP), and salts thereof, dimethylurea compounds such as aromatic dimethylurea, and aliphatic dimethylurea; and the like.

Examples of the primary or secondary amine compound as the curing agent in the present invention include aliphatic amines such as diethylenetriamine, triethylenetetraamine, tetraethylenepentamine, trimethylhexamethylenediamine, 2-methylpentamethylenediamine, 1,3-bisaminomethylcyclohexane, dipropylenediamine, diethylaminopropylamine, bis(4-aminocyclohexyl)methane, norbornenediamine, and 1,2-diaminocyclohexane, alicyclic amines such as N-aminoethylpiperazine and 1,4-bis(3-aminopropyl)piperazine, and aromatic amines such as diaminodiphenylmethane, m-phenylenediamine, m-xylylenediamine, metaphenylenediamine, diaminodiphenylmethane, diaminodiphenylsulfone, and diethyltoluenediamine. Specific examples of primary or secondary amine compound include Kayahard A-A (manufactured by Nippon Kayaku Co., Ltd.: 4,4'-diamino-3,3'-dimethyldiphenylmethane) and the like.

Specific examples of the dimethylurea compound as the curing agent and/or curing accelerator in the present invention include aromatic dimethylureas such as DCMU (3-(3,4-dichlorophenyl)-1,1-dimethylurea) and U-CAT 3512T (manufactured by San-Apro Ltd.); aliphatic dimethylureas such as U-CAT 3503N (manufactured by San-Apro Ltd.), and the like. Among these, aromatic dimethylurea is preferably used from the aspect of curability.

Examples of the organic phosphine compound as the curing agent and/or curing accelerator in the present invention include triphenylphosphine, tetraphenylphosphonium tetra-p-tolylborate, tetraphenylphosphonium tetraphenylborate, tri-tert-butylphosphonium tetraphenylborate, (4-methylphenyl)triphenyl phosphonium thiocyanate, tetraphenylphosphonium thiocyanate, butyltriphenylphosphonium thiocyanate, triphenylphosphine triphenylborane, and the like. Specific examples of the organic phosphine compound include TPP, TPP-MK, TPP-K, TTBuP-K, TPP-SCN, and TPP-S (manufactured by HOKKO CHEMICAL INDUSTRY CO., LTD.), and the like.

The total content of the curing agent and the curing accelerator in the resin composition layer is not particularly limited. From the viewpoint of preventing a decrease in the transparency of the sealing layer (resin composition layer), it is preferably 5% by mass or less, more preferably 1% by mass or less, relative to 100% by mass of the nonvolatile content of the resin composition layer. On the other hand, from the viewpoint of suppressing tack of the sealing layer, the aforementioned total is preferably 0.0005% by mass or more, more preferably 0.001% by mass or more, relative to 100% by mass of the nonvolatile content of the resin composition layer.

The content of the curing accelerator in the resin composition layer is not particularly limited. From the viewpoint of preventing a decrease in the transparency of the sealing layer (resin composition layer), it is preferably 5% by mass or less, more preferably 1% by mass or less, relative to 100% by mass of the nonvolatile content of the resin composition layer. On the other hand, from the viewpoint of suppressing tack of the sealing layer, the content is preferably 0.0005% by mass or more, more preferably 0.001% by mass or more, relative to 100% by mass of the nonvolatile content of the resin composition layer.

### (Plasticizer)

The resin composition layer used in the resin sheet of the present invention may further contain a plasticizer. By using a plasticizer, the flexibility and moldability of the resin composition layer can be improved. The plasticizer is not particularly limited, but a material that is liquid at room temperature is preferably used. Specific examples of the plasticizer include mineral oils such as paraffinic process oil, naphthenic process oil, liquid paraffin, polyethylene wax, polypropylene wax, and Vaseline, vegetable oils such as castor oil, cottonseed oil, rapeseed oil, soybean oil, palm oil, coconut oil, and olive oil, liquid poly-α-olefins such as liquid polybutene, hydrogenated liquid polybutene, liquid polybutadiene, and hydrogenated liquid polybutadiene, and the like. As the plasticizer used in the present invention, liquid poly-α-olefins are preferred, and liquid polybutadiene is particularly preferred. In addition, liquid poly-α-olefins having a low molecular weight are preferred from the viewpoint of adhesion, and those having a weight average molecular weight of 500 to 5,000, more preferably 1,000 to 3,000 are preferred. Only one type of the plasticizer may be used alone or two or more types thereof may be used in combination. Here, "liquid" refers to the state of the plasticizer at room temperature (25°C). When using a plasticizer, the content is preferably 50% by mass or less relative to 100% by mass of the non-volatile content of the resin composition layer, from the viewpoint of not adversely affecting the electronic device.

### (Other components)

The resin composition layer used in the resin sheet of the present invention may contain any other components than the above-mentioned components to the extent that the effect of the present invention is not hindered. Examples of such components include resins other than the above-mentioned polyolefin-based resins and epoxy resins (for example, urethane resin, acrylic resin, polyamide resin, etc.); thickeners such as orben and benton; silicone-based, fluorine-based, and polymer-based defoamers or leveling agents; adhesion-imparting agents such as triazole compound, thiazole compound, triazine compound, and porphyrin compound; and the like.

The thickness of the resin composition layer used in the resin sheet of the present invention is preferably 3 to 100 µm, more preferably 5 to 90 µm, further preferably 10 to 80 um. When the thickness of the resin composition layer is less than 3 µm, the adhesion of the resin sheet decreases and sealing cannot be achieved. When the thickness exceeds 100 µm, residues of the organic solvent used in the resin composition varnish are generated during the formation of the resin sheet, which may affect the electronic device during sealing.

### [Production method of resin sheet - 1]

One method for producing the resin sheet of the present invention includes a step of forming a resin composition layer on the release layer of a first film and a step of laminating a second film or a glass plate to the resin composition layer.

In a preferred embodiment of the present invention, the method for producing a resin sheet of the present invention includes a step of forming a resin composition layer on a release layer of a first film and a step of laminating a second film to the resin composition layer.

### <Step of forming a resin composition layer on the release layer of the first film>

The resin composition layer can be formed by applying a resin composition varnish onto the release layer of the first film by using a die coater or the like, and then drying same. The resin composition varnish is prepared by mixing the components of the resin composition and an organic solvent by using a kneading roller or a rotary mixer. The non-volatile content of the resin composition varnish is preferably 20 to 80% by mass, more preferably 30 to 70% by mass.

Examples of the organic solvent include ketones such as acetone, methyl ethyl ketone (MEK), and cyclohexanone; acetic acid esters such as ethyl acetate, butyl acetate, cellosolve acetate, propylene glycol monomethyl ether acetate, and Carbitol acetate; carbitols such as cellosolve and butyl carbitol; aromatic hydrocarbons such as toluene and xylene; dimethylformamide, dimethylacetamide, N-methylpyrrolidone, and the like; and aromatic mixed solvents such as solvent naphtha. Examples of the products of aromatic mixed solvents include "Swasol" (manufactured by Maruzen Petrochemical Co., Ltd.), and "Ipuzoru" (manufactured by Idemitsu Kosan Co., Ltd.). Only one kind of the organic solvent may be used or two or more kinds thereof may be used in combination.

The varnish is conveniently dried by heating. Heating may be performed under normal pressure or under reduced pressure. The drying temperature and drying time can be appropriately set by a person skilled in the art, according to the components and organic solvents used. For example, the drying temperature is 80 to 170°C, and the drying time is 3 to 60 minutes. When the resin composition layer contains an epoxy resin, the drying temperature is preferably 80 to 100°C, and the drying time is preferably 5 to 90 minutes. When the resin composition layer does not contain an epoxy resin but contains an olefin resin, the drying temperature is preferably 80 to 170°C, and the drying time is preferably 5 to 60 minutes.

### <Step of laminating the second film or glass plate to the resin composition layer>

After forming a resin composition layer on the release layer of the first film, a resin sheet can be produced by laminating the second film (preferably the barrier layer of the second film) or a glass plate to the resulting resin composition layer. For lamination, a known equipment such as roll laminator, press machine, vacuum pressure laminator, etc. can be used. The lamination conditions (temperature, pressure, time, etc.) can be appropriately set by a person skilled in the art.

In the present invention, the second film is a film that is incorporated into an electronic device as a barrier film when sealing the electronic device, and has a water vapor transmission rate of less than 0.01 (g/m²/24hr) (i.e., high moisture permeability resistance). When a barrier film with high moisture permeability resistance is used as a support for varnish coating, warping is likely to occur when heated, and there is a risk that the barrier layer will be damaged during coating, resulting in a decrease in performance for sealing the electronic device. In addition, when the second film has a multilayer structure, the AOI detects air bubbles in the substrate of the laminated structure, and therefore, the suitability of the resin composition layer for AOI evaluation is low. In addition, when the barrier layer is a metal foil, the resin composition layer cannot be evaluated by AOI because it does not have light transmittance. In addition, when the glass plate is thin, it is brittle, and when it is thick, it is difficult to be rolled, making difficult the application to a coating device, and use thereof as a support for coating becomes difficult. These problems can be solved by laminating a second film to the resin composition layer formed on the release layer of the first film according to the above-mentioned production method of the present invention. Note that when the first film is used as a support for forming a resin composition layer, the barrier layer may also be damaged; however, the first film is ultimately peeled off and does not remain on the electronic device, thus causing no problem with the sealing performance of the electronic device. Also, it is disadvantageous in terms of cost to use a highly moisture-resistant barrier film or glass plate as a layer that is peeled off and discarded.

### [Production method of resin sheet - 2]

Another production method for the resin sheet of the present invention includes a step of forming a resin composition layer on the release layer of a first film, laminating a third film to the resin composition layer, and, before sealing the electronic device, peeling off the third film and laminating a second film or a glass plate to the resin composition layer, wherein the third film has a release layer and has a water vapor transmission rate of 0.01 (g/m²/24hr) or more and 1 (g/m²/24hr) or less, and the adhesive strength of the third film to the resin composition layer is lower than the adhesive strength of the first film to the resin composition layer.

In a preferred embodiment of the present invention, the method for producing a resin sheet of the present invention includes a step of forming a resin composition layer on a release layer of a first film, a step of laminating a third film to the resin composition layer, and a step of peeling off the third film and laminating a second film to the resin composition layer before sealing the electronic device, wherein the third film has a release layer and has a water vapor transmission rate of 0.01 (g/m²/24hr) or more and 1 (g/m²/24hr) or less, and the adhesive strength of the third film to the resin composition layer is lower than the adhesive strength of the first film to the resin composition layer.

### <Step of forming a resin composition layer on a release layer of the first film>

This step is as described in the above-mentioned [Production method of resin sheet - 1].

### <Step of laminating a third film to the resin composition layer>

After forming a resin composition layer on the release layer of the first film, the release layer of the third film is laminated to the obtained resin composition layer, thereby producing a resin sheet precursor. For lamination, a known equipment such as roll laminator, press machine, vacuum pressure laminator, etc. can be used. The lamination conditions (temperature, pressure, time, etc.) can be appropriately set by a person skilled in the art.

### <Step of peeling off the third film and laminating a second film or glass plate to the resin composition layer>

The third film can be peeled off by a method known to those skilled in the art. The adhesive strength of the third film to the resin composition layer is lower than that of the first film (i.e., the peeling force of the release layer of the third film is smaller than that of the release layer of the first film), and therefore, the third film is peeled off preferentially to the first film. Then, a second film (preferably with the barrier layer side of the second film in contact with the resin composition layer) or a glass plate is laminated to the exposed resin composition layer to produce a resin sheet. For lamination, a known equipment such as roll laminator, press machine, vacuum pressure laminator, etc. can be used. The lamination conditions (temperature, pressure, time, etc.) can be appropriately set by those skilled in the art.

In the production method 2, the peeling strength of the release layer of the third film is smaller than that of the release layer of the first film. Specifically, the difference between the peeling strength of the release layer of the third film and that of the first film [peeling strength of the release layer of the first film (mN/25 mm) - peeling strength of the release layer of the third film (mN/25 mm)] is not particularly limited as long as the third film is peeled preferentially over the first film. It is preferably 1 to 200 mN/25 mm, more preferably 1 to 150 mN/25 mm, further preferably 1 to 100 mN/25 mm. As used herein, the peeling strength of the release layer is a value measured by the method described in Examples below.

### [Resin sheet precursor]

The present invention also provides a resin sheet precursor having a first film, a resin composition layer, and a third film, wherein the resin composition layer is present between the first film and the third film, the first film has a single-layer plastic film as a substrate, a barrier layer formed on the plastic film surface (preferably one surface of plastic film), and a release layer formed on the barrier layer surface not in contact with the plastic film or on the plastic film surface not having a barrier layer (preferably a plastic film surface not having a barrier layer), the first film is a transparent film, the water vapor transmission rate of the first film is 0.01 (g/m²/24hr) or more and 1 (g/m²/24hr) or less, the third film has a release layer, the water vapor transmission rate of the third film is 0.01 (g/m²/24hr) or more and 1(g/m²/24hr) or less, and the release layer of the first film and the release layer of the third film are in contact with the resin composition layer.

The first film and the resin composition layer used in the resin sheet precursor of the present invention are as described above in the resin sheet of the present invention.

The third film used in the resin sheet precursor of the present invention has a substrate and a release layer, and preferably further has a barrier layer formed on the substrate surface (preferably one surface of the substrate). As used herein, the substrate means the portion of the film other than the barrier layer. The release layer in the third film is formed on the substrate surface (preferably one surface of the substrate) when the film does not have a barrier layer, and may be formed on either the barrier layer surface that is not in contact with the substrate or the substrate surface that does not have a barrier layer when the film has a barrier layer, and is preferably formed on the substrate surface that does not have a barrier layer.

The substrate and the barrier layer are as described in the above-mentioned second film of the resin sheet of the present invention, and the release layer is as described in the above-mentioned first film of the resin sheet of the present invention.

The WVTR of the third film is preferably 0.01 (g/m²/24hr) or more and 0.8 (g/m²/24hr) or less. This WVTR is a value measured by the method described in the Examples below. Since the third film is peeled off and discarded before sealing the electronic device, when the WVTR is in this range, it is possible to simultaneously suppress the water absorption of the resin composition layer during storage and reduce costs.

The third film having a WVTR of 0.01 (g/m²/24hr) or more and 1 (g/m²/24hr) or less can be produced, for example, by a method of depositing an inorganic film containing an inorganic substance such as silicon oxide (silica), aluminum oxide, magnesium oxide, silicon nitride, silicon oxynitride, SiCN, or amorphous silicon on the surface of a substrate as a barrier layer, or by a method of applying a coating liquid made of a metal oxide and an organic resin having barrier properties to the substrate and drying same (see, for example, JP-A-2013-108103 and Japanese Patent No. 4028353). The third film produced by such a method is a transparent film.

The third film may be a commercially available product. Examples of the commercially available product of the third film include "Kurarista CI" manufactured by KURARAY CO., LTD., "Techbarrier HX", "Techbarrier LX", and "Techbarrier L" manufactured by Mitsubishi Plastics, Inc., "IB-PET-PXB" manufactured by Dai Nippon Printing Co., Ltd., "GL, GX series" manufactured by Toppan Printing Co., Ltd, and the like.

The thickness of the third film is preferably 20 to 100 µm, more preferably 20 to 90 µm, further preferably 20 to 80 um. When the thickness of the third film is less than 20 µm, warping occurs in the step of forming the release layer. When the thickness exceeds 100 µm, the obtained resin sheet cannot be wound into a roll.

In one embodiment of the present invention, the resin sheet precursor of the present invention is used as the resin sheet precursor in the above-mentioned [Production method of resin sheet - 2]. Therefore, the third film is peeled off before the second film or the glass plate is laminated to the resin composition layer, and functions as a cover film.

### [Use]

The resin sheet of the present invention can be used for sealing electronic devices. The electronic device is more preferably an electronic device that is vulnerable to moisture, such as organic EL device or solar cell. That is, the resin sheet of the present invention can be suitably used for sealing electronic devices that are vulnerable to moisture, such as organic EL device and solar cell.

### [Sealing of electronic device]

The resin sheet of the present invention can be used to seal an electronic device. Specifically, after peeling off the first film of the resin sheet to expose the resin composition layer, the exposed resin composition layer is placed on the electronic device side (i.e., the resin composition layer is in contact with the electronic device), and the second film or glass plate and the resin composition layer are laminated on the electronic device, and the resin composition layer is cured as described below, thereby sealing the electronic device with the second film or glass plate and the resin composition layer. The lamination method may be a batch type or a continuous type with a roll. In this way, an electronic device sealed with the resin sheet of the present invention can be produced.

Alternatively, the third film of the aforementioned resin sheet precursor may be peeled off, and a second film having no release layer and a water vapor transmission rate of less than 0.01 (g/m²/24hr) or a glass plate having no release layer may be attached to the resin composition layer to obtain a resin sheet having a first film, a resin composition layer, and a second film or a glass plate, and then the first film of the resin sheet may be peeled off, and the second film or the glass plate and the resin composition layer may be laminated on the electronic device with the resin composition layer facing the electronic device, thereby sealing the electronic device with the second film or the glass plate and the resin composition layer. The lamination method may be a batch type or a continuous type using a roll.

The resin composition layer is generally cured by heat curing. Examples of the means thereof include hot air circulating oven, infrared heater, heat gun, high-frequency induction heating device, heating by pressure bonding with a heat tool, and the like. From the viewpoint of bonding the cured resin composition layer (sealing layer) to the electronic device with a sufficiently satisfactory adhesive strength, the curing temperature is preferably 50°C or higher, more preferably 55°C or higher, and the curing time is preferably 10 minutes or longer, more preferably 20 minutes or longer.

### [Example]

While the present invention is explained in more detail in the following by referring to Examples, it is not limited by the following Examples. It is also possible to modify the present invention as long as it is compatible to the above-mentioned and the below-mentioned gist, and practice the present invention, all of which are encompassed in the technical scope of the present invention.

### <Plastic film>

The plastic films (films A to H) used in the following Examples and Comparative Examples and WVTRs thereof, etc. measured by the method described below, are shown in Table 1.

**[Table 1]**

| plastic film | barrier layer | substrate | WVTR [g/m²/24h] | release layer | release layer peel force | total light transmittance [%] | |
|---|---|---|---|---|---|---|---|
| film A | inorganic film* (<1 µm) | PET film (50 µm) | 0.093 | silicone-based | 35 | 91.4 | |
| film B | inorganic film* (<1 µm) | PET film (38 µm) | 0.36 | silicone-based | 17 | 92.2 | |
| film C | none | PET film (38 µm) | 8.4 | silicone-based | 35 | 92.1 | "SP3000" manufactured by TOYO CLOTH CO., LTD. |
| film D | none | PET film (25 µm) | 12.9 | silicone-based | 17 | 89.7 | "SP8002K2" manufactured by TOYO CLOTH CO., LTD. |
| film E | aluminum foil (30 µm) | PET film (25 µm) | <0.001 | silicone-based | 35 | 0.0 | "1N30" manufactured by Toyo Aluminum Co., Ltd. |
| film F | silica vapor deposition film | PET film (12 µm) | 0.08 | none | - | 89.2 | "TECHBARRIER HX" manufactured by Mitsubishi Chemical Corporation |
| film G | aluminum foil (30 µm) | PET film (25 µm) | <0.001 | none | - | 0.0 | "1N30" manufactured by Toyo Aluminum Co., Ltd. |
| film H | planarizing layer** + inorganic film* | PET film (50 µm) | 0.001 | none | - | 90.7 | "Verreal" manufactured by Reiko Co., Ltd. |

* inorganic film made of silicon, oxygen and carbon
** transparent plastic layer made of polyethylene terephthalate film

In the Examples and Comparative Examples, a film in which Film F having a barrier layer and Film C or Film D having a release layer were bonded together with an adhesive was used, and is described as follows:
"C+F": a film in which the opposite side of the release layer of Film C and the opposite side of the barrier layer of Film F were bonded together with an adhesive (film thickness: 52 um, total light transmittance: 89.6%)
"D+F": a film in which the opposite side of the release layer of Film D and the opposite side of the barrier layer of Film F were bonded together with an adhesive (film thickness: 39 um, total light transmittance: 89.6%)

Measurement of release layer peel strength: A polyester adhesive tape No. 31B manufactured by Nitto Denko Corporation was adhered to the surface of the release layer, pressed with a rubber roller, and left at room temperature for 20 hr, after which the T-type peel strength (release layer peel strength [mN/25 mm]) was measured at a peel speed of 300 mm/min.

Measurement of total light transmittance: The total light transmittance (%) of the plastic films shown in Table 1 was measured in accordance with JIS K7361-1 using HZ-V3 manufactured by Suga Test Instruments Co., Ltd. The measurement light was a D65 light source, and the air was used as a reference.

### <Production of resin composition varnish>

### (Production Example 1: production of polyolefin-based resin composition varnish A)

Maleic anhydride-modified liquid polyisobutylene ("HV-300M" manufactured by TOHO Chemical Industry Co., Ltd.) (35 parts by mass), polybutene ("HV-1900" manufactured by ENEOS (former company name "JXTG energy")) (60 parts by mass), and half-calcined hydrotalcite ("DHT-4C" manufactured by Kyowa Chemical Industry Co., Ltd.) (100 parts by mass) were dispersed using a three-roll mill in a 60 mass % swasol solution (130 parts by mass) of a cyclohexane ring-containing saturated hydrocarbon resin ("Arkon P125" manufactured by Arakawa Chemical Industries, Ltd.) to give a mixture. The obtained mixture was blended with a 20 mass % swasol solution of glycidyl methacrylate-modified polypropylene-polybutene copolymer ("T-YP341" manufactured by SEIKO PMC CORPORATION) (200 parts by mass), an anionic polymerization type curing agent (2,4,6-tris(dimethylaminomethyl)phenol) (0.5 parts by mass), and toluene (16 parts by mass), and the obtained mixture was uniformly dispersed in a high-speed rotary mixer to give a polyolefin-based resin composition varnish A.

### (Production Example 2: polyolefin-based resin composition varnish B)

Prepared in the same manner as polyolefin-based resin composition varnish A, except that the half-calcined hydrotalcite was changed to calcium oxide ("HAL-G" manufactured by Yoshizawa Lime Industry CO., LTD.).

### (Production Example 3: epoxy resin composition varnish C)

56 parts by mass of liquid bisphenol A type epoxy resin ("jER828EL" manufactured by Mitsubishi Chemical Corporation, epoxy equivalent: approximately 185), 1.2 parts by mass of a silane coupling agent ("KBM403" manufactured by Shin-Etsu Chemical Co., Ltd.), 2 parts by mass of talc powder ("FG15" manufactured by Nippon Talc Co., Ltd.), and 15 parts by mass of half-calcined hydrotalcite ("DHT-4A-2" manufactured by Kyowa Chemical Industry Co., Ltd.) were kneaded and then dispersed using a three-roll mill to obtain a mixture. A mixture of 1.5 parts by mass of a curing accelerator ("U-3512T" manufactured by San-Apro Co., Ltd.) dissolved in 81 parts by mass of a 35% by mass solution of a phenoxy resin ("YL7213" manufactured by Mitsubishi Chemical Corporation) in methyl ethyl ketone (MEK) was mixed with the mixture previously prepared by dispersing using a three-roll mill, 30 parts by mass of an 80% by mass MEK solution of a solid bisphenol A type epoxy resin solution ("jER1001" manufactured by Mitsubishi Chemical Corporation), 20 parts by mass of organic solvent-dispersed colloidal silica (amorphous silica particle size 10-15 nm, non-volatile content: 30% by mass, solvent: MEK, "MEK-EC-2130Y" manufactured by Nissan Chemical Industries, Ltd.), and 3 parts by mass of an ionic liquid curing agent (N-acetylglycine tetrabutylphosphonium salt) and uniformly dispersed using a high-speed rotating mixer to obtain an epoxy resin composition varnish C.

### <Production of resin sheet>

### Example 1

Film A was used as the first film, and film H was used as the second film. The polyolefin-based resin composition varnish A obtained in Production Example 1 was uniformly applied to the release layer surface of the first film by using a die coater, and heated at 130°C for 60 min to obtain a film having a resin composition layer with a thickness of 20 um (residual solvent amount in the resin composition layer: about 1 mass%). Then, the resin composition layer of the obtained film and the barrier layer of the second film were laminated together so that they were in contact with each other, and the film was wound into a roll. The rolled resin sheet was slit to a width of 450 mm to obtain a resin sheet with a size of 450 x 300 mm.

### Examples 2 - 4 and Comparative Examples 1 - 4

Resin sheets of Examples 2 to 4 and Comparative Examples 1 to 4 were produced basically in the same manner as in Example 1, except that the films shown in Table 2 below were used as the first film or second film, and the polyolefin-based resin composition varnishes A and B or the epoxy resin composition varnish C obtained in Production Examples 1 to 3 were used to form the resin composition layer (thickness of the resin composition layer: 20 um). The configurations of the resulting resin sheets are shown in Table 2 below. In Example 3, in which the epoxy resin composition varnish C was used, the epoxy resin composition varnish C was applied, and then dried at 80 to 100°C (average 90°C) for 5 min to form a resin composition layer (amount of residual solvent in the resin composition layer: about 2% by mass).

### Examples 5 - 6 and Comparative Examples 5 - 8

The resin sheet precursors of Examples 5 to 6 and Comparative Examples 5 to 8 were produced basically in the same manner as in Example 1, except that the films shown in Table 3 below were used as the first film or the third film, and the polyolefin-based resin composition varnish A obtained in Production Example 1 was used to form the resin composition layer (thickness of the resin composition layer: 20 um). The configurations of the obtained resin sheet precursors are shown in Table 3 below.

### <Measurement method>

### (1) Measurement of water vapour transmission rate (WVTR)

The water vapor transmission rate (g/m²/24hr) of the plastic films shown in Table 1 was measured in accordance with JIS K7129B using a PERMATRAN-W3/34G manufactured by MOCON Co., Ltd. The measurement environment was 40°C and 90% RH.

### (2) Measurement of water content

The water content of the resin composition layer before and after storage of the resin sheets produced in Examples 1 to 4 and Comparative Examples 1 to 4, and the resin sheet precursors produced in Examples 5 and 6 and Comparative Examples 5 to 8 was measured as follows. The unit of water content described below is "ppm" based on mass.

First, the prepared resin sheets and resin sheet precursors were cut into 7 cm squares. Only the first film was peeled off from the resin sheets of Examples 1 to 4 and Comparative Examples 1 to 4, and the first and third films were peeled off from the resin sheet precursors of Examples 5 and 6 and Comparative Examples 5 to 8. These were used as samples before storage, and the water content of the resin composition layer was measured by the coulometric titration method using a Karl Fischer water content measuring device ("trace moisture measuring apparatus CA-200J" manufactured by Mitsubishi Chemical Analytic Co., Ltd.). The water content before storage (initial water content I) is shown in the following Tables 2 and 3.

The device consists of a heatable glass container in which a sample is placed and a titration device containing a reaction solution for titrating the moisture vaporized when heating the sample. The vaporized moisture moves from the glass container to the reaction solution side of the titration device by flowing nitrogen at a flow rate: 250±25 ml/min. For the measurement, the sample was placed in a glass container replaced with a nitrogen atmosphere (water vapor content <0.1 ppm (mass standard)), the amount of moisture vaporized under the condition of 130°C was titrated, and the water content of the resin composition layer was calculated.

In addition, the resin sheet and the resin sheet precursor cut into 7 cm squares were stored for 7 days under an atmosphere of 25°C and 50% RH, and then the first film alone or the first and third films were peeled off in the same manner as above. Using these as samples after storage, the moisture content of the resin composition layer was measured in the same manner. The moisture content after storage (moisture content after storage II) is shown in the following Tables 2 and 3.

The ratio of water content after storage and water content before storage that were measured as mentioned above (namely, water content after storage/water content before storage, hereinafter sometimes to be indicated as "water content increase rate II/I") was calculated. The ratio is also shown in the following Tables 2 and 3.

Based on the ratio of the moisture content after storage to the moisture content before storage (moisture content increase rate II/I), the resin sheet and the resin sheet precursor were evaluated according to the following criteria. The results are also shown in the following Tables 2 and 3.

### (Evaluation criteria for moisture content increase rate)

O (Good): moisture content increase rate is less than 2.5
× (Bad): moisture content increase rate is 2.5 or more

### (Laminating a barrier film to a resin sheet precursor)

The third film of the resin sheet precursor produced in Examples 5 and 6 was peeled off, and the barrier layer of film H was laminated to the resin composition layer by vacuuming at 80°C for 30 sec using a vacuum laminator (V-160 manufactured by Nikko Materials Co., Ltd.) and then pressing at 80°C and 0.3 MPa for 30 sec to produce a resin sheet laminated with a barrier film. The resin sheet produced was cut into 7 cm square samples, and the moisture content increase rate was measured. The results were all less than 1.5 (evaluated as ○ (good)), confirming the effectiveness of this configuration (the resin sheet of the present invention can be produced using the resin sheet precursor).

### (3) Practice of optical automatic appearance inspection

The first film used in the Examples and Comparative Examples was observed with an optical automatic appearance inspection device (AOI) when the resin composition varnish was applied. Specifically, 80 m of the first film with a width of 950 mm was placed on the AOI, and the number of defects with a length and width of 50 × 50 um or more was detected and evaluated according to the following criteria.

### (Evaluation criteria for the number of defects detected by AOI)

○ (Good): number of defects with a length and width of 50 × 50 um or more is less than 10
× (Bad): number of defects with a length and width of 50 × 50 um or more is 10 or more

As a result of AOI detection, many defects due to voids and particles that occurred when the film was laminated with adhesive were detected in the laminated film "C+F". On the other hand, film E could not be evaluated by AOI because the aluminum foil was reflective, and was rated as ×.

### (4) Evaluation of warping

The prepared resin sheet and resin sheet precursor were cut into 50 mm × 50 mm pieces and heated at 150°C for 5 min. Warping was evaluated according to the following criteria.

### (Warping evaluation criteria)

○ (Good): maximum warping of resin sheet and resin sheet precursor is less than 1.5 cm
× (Bad): maximum warping of resin sheet and resin sheet precursor is 1.5 cm or more

**[Table 2]**

| | | Example 1 | Example 2 | Example 3 | Example 4 | Comparative Example 1 | Comparative Example 2 | Comparative Example 3 | Comparative Example 4 |
|---|---|---|---|---|---|---|---|---|---|
| first film | support, resin coating layer | A | A | A | A | C+F | E | C+F | C |
| resin composition layer | | A | B | C | A | A | A | A | A |
| second film | barrier film | H | H | H | G | H | H | G | H |
| evaluation | initial water content I | 6894 | 684 | 1955 | 3718 | 6487 | 6555 | 2561 | 7835 |
| | water content after storage II | 5707 | 921 | 2250 | 3940 | 5849 | 6253 | 2595 | 15952 |
| | water content increase rate II/I | 0.83 | 1.35 | 1.15 | 1.06 | 0.90 | 0.95 | 1.01 | 2.04 |
| | evaluation | ○ | ○ | ○ | ○ | ○ | ○ | ○ | × |
| | number of defects detected by AOI | 4 | 4 | 4 | 4 | 15 | evaluation not possible | 15 | 0 |
| | evaluation | ○ | ○ | ○ | ○ | × | × | × | ○ |
| | warping | 1.2 | 1.2 | 1.2 | 0.7 | 1.0 | 0.5 | 0.5 | 1.5 |
| | evaluation | ○ | ○ | ○ | ○ | ○ | ○ | ○ | × |

**[Table 3]**

| | | Example 5 | Example 6 | Comparative Example 5 | Comparative Example 6 | Comparative Example 7 | Comparative Example 8 |
|---|---|---|---|---|---|---|---|
| first film | support, resin coating layer | A | A | C+F | C+F | E | C |
| resin composition layer | | A | A | A | A | A | A |
| third film | cover film | B | D+F | B | D+F | D+F | D |
| evaluation | initial water content I | 760 | 800 | 980 | 762 | 3721 | 6310 |
| | water content after storage II | 1120 | 1500 | 1714 | 962 | 6788 | 20487 |
| | water content increase rate II/I | 1.47 | 1.88 | 1.75 | 1.26 | 1.82 | 3.25 |
| | evaluation | ○ | ○ | ○ | ○ | ○ | × |
| | number of defects detected by AOI | 4 | 4 | 15 | 15 | evaluation not possible | 0 |
| | evaluation | ○ | ○ | × | × | × | ○ |
| | warping | 0.8 | 1.4 | 1.5 | 2.5 | 0.5 | 0.5 |
| | evaluation | ○ | ○ | × | × | ○ | ○ |

From the results in Tables 2 and 3, it can be seen that the resin sheets and resin sheet precursors of the Examples of the present invention show good evaluation of the moisture content increase rate, and therefore can suppress water absorption in the resin composition layer during storage, and the like, have good detection accuracy for the number of AOI detection defects in the resin composition layer, and have good warping evaluation, thus enabling stable mass production.

### [Industrial Applicability]

The resin sheet and resin sheet precursor of the present invention can suppress water absorption in a resin composition layer of a resin sheet (particularly water absorption in a resin composition layer containing half-calcined hydrotalcite or calcium oxide), permit foreign matter inspection of the resin composition layer of a resin sheet with high accuracy using an optical automatic appearance inspection device (AOI), and can suppress warping during formation of the resin composition layer.

This application is based on patent application No. 2022-050185 filed in Japan, the contents of which are encompassed in full herein.

## Claims

1. A resin sheet having a first film, a resin composition layer, and a second film or a glass plate,
wherein the resin composition layer is present between the first film and the second film or between the first film and
the glass plate,
the first film has a single-layer plastic film as a substrate, a barrier layer formed on the plastic film surface, and a release layer formed on the barrier layer surface not in contact with the plastic film or on the plastic film surface not having a barrier layer,
the first film is a transparent film,
the water vapor transmission rate of the first film is 0.01 (g/m²/24hr) or more and 1 (g/m²/24hr) or less,
the release layer of the first film is in contact with the resin composition layer,
the second film does not have a release layer,
the water vapor transmission rate of the second film is less than 0.01 (g/m²/24hr),
and the glass plate does not have a release layer.

2. The resin sheet according to claim 1, having a first film, a resin composition layer, and a second film,
wherein the resin composition layer is present between the first film and the second film,
the first film has a single-layer plastic film as a substrate, a barrier layer formed on the plastic film surface, and a release layer formed on the barrier layer surface not in contact with the plastic film or on the plastic film surface not having a barrier layer,
the first film is a transparent film,
the water vapor transmission rate of the first film is 0.01 (g/m²/24hr) or more and 1 (g/m²/24hr) or less,
the release layer of the first film is in contact with the resin composition layer,
the second film does not have a release layer, and
the water vapor transmission rate of the second film is less than 0.01 (g/m²/24hr).

3. The resin sheet according to claim 1 or 2, wherein a thickness of the first film is 20 um to 100 um.

4. The resin sheet according to any one of claims 1 to 3, wherein the first film has a total light transmittance of 80% or more.

5. The resin sheet according to any one of claims 1 to 4, wherein the first film is a support for forming a resin composition layer.

6. The resin sheet according to any one of claims 1 to 5, wherein the resin composition layer comprises a hygroscopic filler.

7. The resin sheet according to claim 6, wherein the hygroscopic filler is half-calcined hydrotalcite or calcium oxide.

8. The resin sheet according to any one of claims 1 to 7, wherein the resin composition layer comprises a polyolefin-based resin and/or an epoxy resin.

9. The resin sheet according to claim 8, wherein the resin composition layer comprises a polyolefin-based resin.

10. A method for producing the resin sheet according to any one of claims 1 to 9, comprising a step of forming a resin composition layer on the release layer of the first film and a step of laminating a second film or a glass plate to the resin composition layer.

11. A method for producing an electronic device, comprising a step of peeling off a first film of the resin sheet according to any one of claims 1 to 9, laminating a second film or a glass plate and a resin composition layer to the electronic device with the resin composition layer facing the electronic device, and sealing the electronic device with the second film or the glass plate and the resin composition layer.

12. A resin sheet precursor having a first film, a resin composition layer, and a third film,
wherein the resin composition layer is present between the first film and the third film,
the first film has a single-layer plastic film as a substrate, a barrier layer formed on the plastic film surface, and a release layer formed on the barrier layer surface or the plastic film surface,
the first film is a transparent film,
the water vapor transmission rate of the first film is 0.01 (g/m²/24hr) or more and 1 (g/m²/24hr) or less,
the third film has a release layer,
the water vapor transmission rate of the third film is 0.01 (g/m²/24hr) or more and 1 (g/m²/24hr) or less, and
the release layer of the first film and the release layer of the third film are in contact with the resin composition layer.

13. The resin sheet precursor according to claim 12, wherein the resin composition layer comprises half-calcined hydrotalcite or calcium oxide as a hygroscopic filler.

14. A method for producing the resin sheet precursor according to claim 12 or 13, comprising a step of forming a resin composition layer on the release layer of the first film and a step of laminating a third film to the resin composition layer.

15. A method for producing an electronic device, comprising a step of peeling off the third film of the resin sheet precursor according to claim 12 or 13, laminating a second film having no release layer and having a water vapor transmission rate of less than 0.01 (g/m²/24hr) or a glass plate having no release layer to the resin composition layer to obtain a resin sheet having the first film, the resin composition layer, and the second film or the glass plate, and then peeling off the first film of the resin sheet, and laminating the second film or the glass plate and the resin composition layer to the electronic device with the resin composition layer facing the electronic device, and sealing the electronic device with the second film or the glass plate and the resin composition layer.
